# EUROPEAN PATENT SPECIFICATION

(11) **EP 2 426 333 B1**
(45) Date of publication and mention of the grant of the patent: **24.08.2016**
(21) Application number: 09844004.3
(22) Date of filing: 28.04.2009
(51) Int. Cl.: F01N 13/10, F01N 13/06, F01N 13/08, F01N 3/20, F02B 37/00, F02B 37/18, F02B 37/007

(54) **MULTI-CYLINDER INTERNAL COMBUSTION ENGINE**
MEHRZYLINDERVERBRENNUNGSMOTOR
MOTEUR À COMBUSTION INTERNE À CYLINDRES MULTIPLES

(43) Date of publication of application: 07.03.2012
(73) Proprietor: TOYOTA JIDOSHA KABUSHIKI KAISHA, Toyota-shi, Aichi-ken, 471-8571 (JP)
(72) Inventor: UESUGI, Tsuyoshi, Toyota-shi, Aichi-ken, 471-8571 (JP)
(74) Representative: Winter, Brandl, Fürniss, Hübner, Röss, Kaiser, Polte - Partnerschaft mbB
(86) International application number: PCT/JP2009/058420
(87) International publication number: WO 2010/125660

(56) References cited:
- WO-A1-2008/083769
- DE-A1- 10 230 934
- JP-A- 4 134 119
- US-A- 5 488 827
- US-A1- 2007 169 479
- US-A1- 2009 090 108

## Description

### TECHNICAL FIELD

The present invention relates to a multi-cylinder internal combustion engine.

### BACKGROUND ART

Conventionally, this type of multi-cylinder internal combustion engine has been proposed as disclosed in, for example, Patent Document 1. The typical multi-cylinder internal combustion engine, including the one disclosed in Patent Document 1, includes an exhaust manifold, a turbine forming an exhaust driven supercharging device, and an exhaust purifying device in that order from the upstream end of the flow of exhaust gas. The exhaust manifold is connected to a turbine housing forming the outer wall of the turbine by a first conduit, and the turbine housing is connected to the exhaust purifying device by a second conduit. The exhaust manifold includes branch pipes connected to cylinders, and a manifold main body to which the branch pipes are connected at the downstream ends thereof along the flow of exhaust gas. With this structure, exhaust gas discharged from the cylinders of the internal combustion engine is collected at the manifold main body through the branch pipes, and is supplied to the turbine through the first conduit. Accordingly, the supercharging device is driven. Then, the exhaust gas from the turbine is introduced into the exhaust purifying device through the second conduit, and is purified while passing through the inside of the exhaust purifying device.

In such a conventional multi-cylinder internal combustion engine, the turbine housing and the exhaust purifying device are mounted on the exhaust manifold at downstream of the exhaust manifold in series. Thus, the number of components of the exhaust system located downstream of the exhaust manifold in series is increased, which hinders assembly of the exhaust system.

This problem is not limited to the multi-cylinder internal combustion engine including a turbine forming an exhaust driven supercharging device, but is generally common among multi-cylinder internal combustion engines including other exhaust devices.

Patent Document 1: Japanese Laid-Open Patent Publication No. 4-237858

Document US 5 488 827 A discloses an apparatus having multiple turbochargers with the features of the preamble of claim 1.

### SUMMARY OF THE INVENTION

Accordingly, it is an objective of the present invention to provide an internal combustion engine in which an exhaust system is easily assembled.

To achieve the above objective, the present invention provides a multi-cylinder internal combustion engine including an exhaust manifold, a supplying conduit, a discharging conduit, and an exhaust pipe. The exhaust manifold includes branch pipes connected to cylinders, a manifold main body to which the branch pipes are connected at downstream ends of the branch pipes along the flow of exhaust gas, and a partition located inside the manifold main body to divide an internal space of the manifold main body into a first space including connection portions at which the branch pipes are connected and a second space not including the connection portions. The supplying conduit connects part of an outer wall of the manifold main body forming the first space to an exhaust device provided outside of the manifold main body, and supplies exhaust gas from the first space to the exhaust device. The discharging conduit connects part of the outer wall of the manifold main body forming the second space to the exhaust device, and discharges the exhaust gas from the exhaust device to the second space. The exhaust pipe is connected to part of the outer wall of the manifold main body forming the second space. The exhaust pipe discharges the exhaust gas from the second space.

With this structure, the exhaust gas discharged from the cylinders of the internal combustion engine is collected in the first space of the manifold main body through the branch pipes of the exhaust manifold. Subsequently, the exhaust gas is supplied to the exhaust device through the supplying conduit. The exhaust gas from the exhaust device is discharged to the second space of the manifold main body through the discharging conduit. Subsequently, the exhaust gas is discharged to the outside of the exhaust manifold through the exhaust pipe.

Since the exhaust device is connected to the exhaust manifold on both the upstream and downstream ends of the exhaust device along the flow of exhaust gas, the exhaust system is assembled by separately mounting the exhaust device and the exhaust pipe to the exhaust manifold. Also, as compared to a structure in which the exhaust device and the exhaust pipe are mounted on the exhaust manifold in series at the downstream end of the exhaust manifold, the number of components of the exhaust system located downstream of the exhaust manifold is reduced. This facilitates assembly of the exhaust system.

According to one aspect of the present invention, the supplying conduit includes a first supplying conduit and a second supplying conduit. The exhaust device includes a first exhaust device, which is connected to the first supplying conduit, and a second exhaust device, which is connected to the second supplying conduit. The discharging conduit includes a first discharging conduit, which is connected to the first exhaust device, and a second discharging conduit, which is connected to the second exhaust device.

According to this aspect, the first and second exhaust devices are secured to the exhaust manifold on both the upstream and downstream ends of each exhaust device along the flow of exhaust gas. Thus, the exhaust system is assembled by separately mounting the first exhaust device, the second exhaust device, and the exhaust pipe on the exhaust manifold. Also, as compared to a structure in which the first and second exhaust devices and the exhaust pipe are mounted on the exhaust manifold downstream of the exhaust manifold in series, the number of components of the exhaust system located downstream of the exhaust manifold is reduced. This facilitates assembly of the exhaust system.

Also, the first exhaust device is preferably a low pressure turbine provided in an exhaust driven low pressure supercharging device. The second exhaust device is preferably a high pressure turbine provided in an exhaust driven high pressure supercharging device. The high pressure turbine has a higher expansion ratio as compared to the low pressure turbine. The multi-cylinder internal combustion engine preferably includes an adjusting valve located in the first supplying conduit. The adjusting valve adjusts the flow rate of exhaust gas flowing into the low pressure turbine.

Also, the connection portions between the branch pipes and the manifold main body are preferably arranged in a line. The manifold main body is preferably formed to extend along an arrangement direction of the connection portions. The first supplying conduit and the first discharging conduit are preferably connected to the manifold main body on one end of the arrangement direction. The second supplying conduit and the second discharging conduit are preferably connected to the manifold main body on the other end of the arrangement direction.

In this aspect, the distance between the first supplying conduit and the first discharging conduit with respect to the second supplying conduit and the second discharging conduit is increased. This further facilitates assembly of the exhaust system.

Also, the exhaust pipe is preferably connected to the manifold main body at a position between a first discharging conduit joint, at which the first discharging conduit is connected to the manifold main body, and a second discharging conduit joint, at which the second discharging conduit is connected to the manifold main body.

The low pressure supercharging device and the high pressure supercharging device are preferably arranged such that a low pressure compressor provided in the low pressure supercharging device faces a high pressure compressor provided in the high pressure supercharging device.

In this aspect, the distance between the low pressure compressor and the high pressure compressor is reduced. This simplifies the structure of the intake system.

An exhaust purifying device for purifying the exhaust gas is preferably connected to a downstream end of the exhaust pipe along the flow of exhaust gas.

In this aspect, the exhaust purifying device is mounted on the exhaust manifold independently from the low pressure turbine and the high pressure turbine. Also, as compared to a structure in which the turbines, the exhaust pipe, and the exhaust device are mounted on the exhaust manifold downstream of the exhaust manifold in series, the number of components of the exhaust system located downstream of the exhaust manifold is reduced. This facilitates assembly of the exhaust system.

Also, an addition valve is preferably provided which adds an additive to the exhaust gas downstream of the high pressure turbine along the flow of exhaust gas and upstream of an exhaust pipe joint at which the exhaust pipe is connected to the exhaust manifold.

In this aspect, since the addition valve is located downstream of the low pressure turbine and the high pressure turbine along the flow of exhaust gas, the additive is prevented from adhering to the movable parts of the turbines. Also, since the distance between the addition valve and the exhaust purifying device is increased as compared to a structure in which the addition valve is provided in the exhaust pipe, the additive added from the addition valve is adequately dispersed before the additive flows into the exhaust purifying device. Thus, the additive is evenly distributed in the exhaust purifying device.

In this case, the addition valve is preferably provided in the manifold main body.

The connection portions between the branch pipes and the manifold main body are preferably arranged in a line. The manifold main body is preferably formed to extend in the arrangement direction of the connection portions. The first supplying conduit and the first discharging conduit are preferably connected to the manifold main body on one end of the arrangement direction. The second supplying conduit and the second discharging conduit are preferably connected to the manifold main body on the other end in the arrangement direction. The exhaust pipe joint is preferably located between a first discharging conduit joint, at which the first discharging conduit is connected to the manifold main body, and a second discharging conduit joint, at which the second discharging conduit is connected to the manifold main body, and closer to the first discharging conduit joint with respect to the center position of the first and second discharging conduits. The addition valve is preferably located closer to the second discharging conduit joint with respect to the center position between the second discharging conduit joint and the exhaust pipe joint. In this aspect, in the structure in which the addition valve is located between the second discharging conduit joint and the exhaust pipe joint, the distance between the addition valve and the exhaust pipe joint is adequately increased. Thus, the additive is evenly distributed in the exhaust purifying device.

### BRIEF DESCRIPTION OF THE DRAWINGS

Fig. 1 is a side view illustrating an internal combustion engine according to a first embodiment of the present invention;
Fig. 2 is a cross-sectional view taken along line 2-2 in Fig. 1;
Fig. 3 is a cross-sectional view taken along line 3-3 in Fig. 1;
Fig. 4 is a cross-sectional view taken along line 4-4 in Fig. 1;
Fig. 5 is an explanatory cross-sectional view showing the flow of exhaust gas in the internal combustion engine of Fig. 2;
Fig. 6 is an explanatory cross-sectional view showing the flow of exhaust gas in the internal combustion engine of Fig. 2;
Fig. 7 is a cross-sectional view illustrating an exhaust manifold of an internal combustion engine according to a second embodiment of the present invention;
Fig. 8 is a cross-sectional view illustrating an exhaust manifold of an internal combustion engine according to a modification of the present invention;
Fig. 9 is a cross-sectional view illustrating an exhaust manifold of an internal combustion engine according to another modification of the present invention;
Fig. 10 is a cross-sectional view illustrating an exhaust manifold of an internal combustion engine according to another modification of the present invention; and
Fig. 11 is another cross-sectional view illustrating the exhaust manifold of Fig. 10.

### BEST MODE FOR CARRYING OUT THE INVENTION

### <First Embodiment>

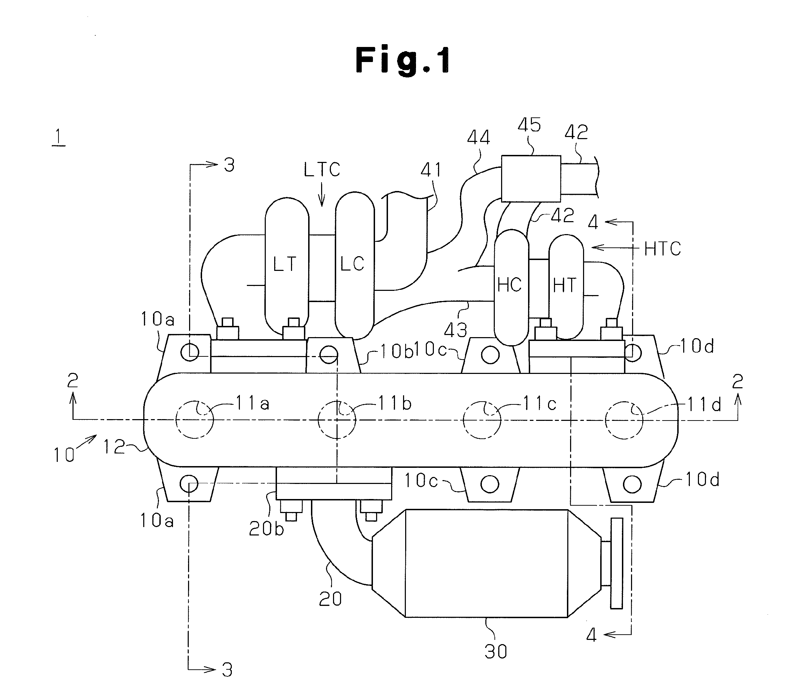

A multi-cylinder internal combustion engine according to a first embodiment of the present invention will now be described with reference to Figs. 1 to 6. The multi-cylinder internal combustion engine is an inline four-cylinder internal combustion engine in the first embodiment.

Fig. 1 shows a side structure of the internal combustion engine 1 according to the first embodiment. Fig. 1 is a side view as viewed from an exhaust manifold 10.

As shown in Fig. 1, the exhaust manifold 10 is mounted on a cylinder head of the internal combustion engine 1. The exhaust manifold 10 includes branch pipes 11a to 11d connected to cylinders (in this example, four cylinders #1 to #4), and a manifold main body 12 to which the branch pipes 11 a to 11d are connected at downstream ends of the branch pipes 11 a to 11 d along the flow of exhaust gas. The exhaust manifold 10 is mounted on the cylinder head via manifold flanges 10a to 10d provided at the distal end of the branch pipes 11a to 11 d.

The internal combustion engine 1 includes a low pressure supercharging device LTC and a high pressure supercharging device HTC. The low pressure supercharging device LTC includes a low pressure turbine LT, which is rotated by exhaust gas, and a low pressure compressor LC, which is rotated integrally with the low pressure turbine LT and supercharges intake air. Also, the high pressure supercharging device HTC includes a high pressure turbine HT, which is rotated by exhaust gas, and a high pressure compressor HC, which is rotated integrally with the high pressure turbine HT and supercharges intake air. The high pressure turbine HT has a greater expansion ratio as compared to the low pressure turbine LT. Also, the high pressure compressor HC has a greater compression ratio as compared to the low pressure compressor LC.

The intake system of the internal combustion engine 1 includes a first intake pipe 41, the low pressure compressor LC, an intake connecting pipe 43, the high pressure compressor HC, and a second intake pipe 42 in that order from an upstream end of the flow of intake air. Also, one end of an intake bypass pipe 44 for bypassing the high pressure compressor HC is connected to the middle of the intake connecting pipe 43, and the other end of the intake bypass pipe 44 is connected to the middle of the second intake pipe 42. Further, an intake switching valve 45 for adjusting the flow rate of intake air bypassing the high pressure compressor HC is provided at part of the second intake pipe 42 to which the intake bypass pipe 44 is connected. That is, when the intake switching valve 45 is fully closed, and communication between the intake bypass pipe 44 and the second intake pipe 42 located downstream of the pipe 44 is blocked, the intake air from the low pressure compressor LC entirely flows through the intake connecting pipe 43 into the high pressure compressor HC. When the intake switching valve 45 is opened from this state, part or all of the intake air from the low pressure compressor LC does not flow into the high pressure compressor HC, but flows through the intake bypass pipe 44 into the second intake pipe 42 located downstream of the compressor HC.

Also, an exhaust pipe 20 is connected to a downstream end of the exhaust manifold 10 along the flow of exhaust gas, and an exhaust purifying device 30 for purifying the exhaust gas is connected to a downstream end of the exhaust pipe 20 along the flow of exhaust gas. The exhaust pipe 20 is mounted on the exhaust manifold 10 via an exhaust pipe flange 20b located at the upstream end of the exhaust pipe 20 along the flow of exhaust gas.

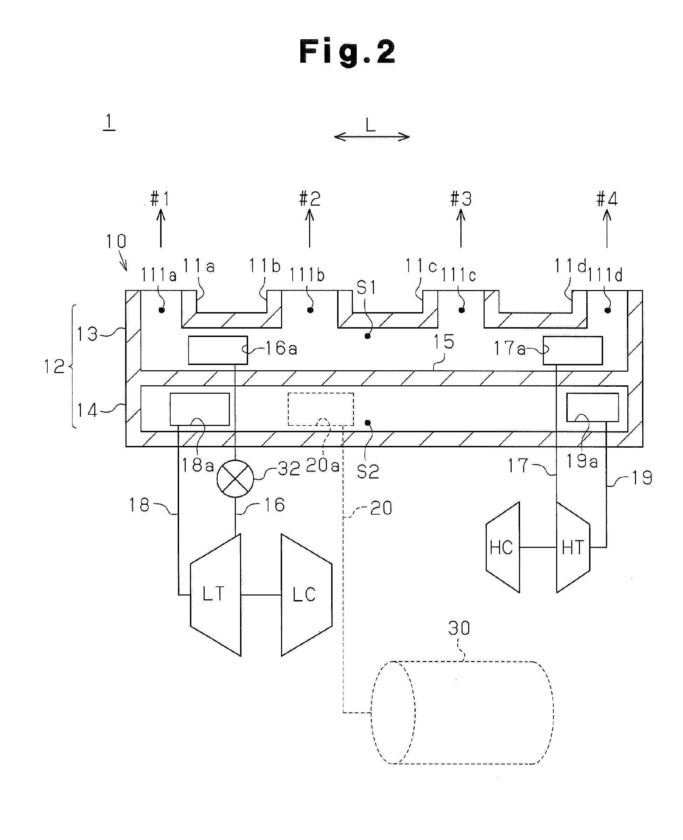

As shown in Fig. 2, connection portions 111a to 111d between the branch pipes 11 a to 11d and the manifold main body 12 are arranged in a line. The manifold main body 12 has a substantially rectangular parallelepiped shape extending along the arrangement direction L (the left and right direction in Fig. 2) of the connection portions 111a to 111d. The shape of the manifold main body 12 is not limited to the substantially rectangular parallelepiped shape, but may be a substantially cylindrical shape. Also, a partition 15 is formed inside the manifold main body 12. The partition 15 divides the internal space of the manifold main body 12 into a first space S1 including the connection portions 111a to 111d and a second space S2 not including the connection portions 111a to 111 d. In the first embodiment, the partition 15 has a substantially planar shape extending along the arrangement direction L. Hereinafter, part of the outer wall of the manifold main body 12 forming the first space S1 is referred to as a first outer wall 13, and part of the outer wall of the manifold main body 12 forming the second space S2 is referred to as a second outer wall 14.

A first supplying conduit 16 and a second supplying conduit 17 are connected to the first outer wall 13. The first supplying conduit 16 and the second supplying conduit 17 supply exhaust gas from the first space S1 to the low pressure turbine LT and the high pressure turbine HT provided outside the manifold main body 12. Further, a first discharging conduit 18 and a second discharging conduit 19 are connected to the second outer wall 14. The first discharging conduit 18 and the second discharging conduit 19 discharge exhaust gas from the low pressure turbine LT and the high pressure turbine HT to the second space S2. Also, an exhaust pipe 20 for introducing exhaust gas from the second space S2 to the exhaust purifying device 30 is connected to the second outer wall 14. Further, an exhaust switching valve 32, which switches the manner in which the exhaust gas flows into the low pressure turbine LT, is located in the middle of the first supplying conduit 16.

The joint between the second outer wall 14 and the first discharging conduit 18, which is a first discharging conduit joint 18a, is formed closer to the first branch pipe 11a with respect to the position of a first supplying conduit joint 16a in the arrangement direction L. Further, the joint between the second outer wall 14 and the second discharging conduit 19, which is a second discharging conduit joint 19a, is formed closer to the fourth branch pipe 11d with respect to the position of a second supplying conduit joint 17a in the arrangement direction L.

In addition, the joint between the second outer wall 14 and the exhaust pipe 20, which is an exhaust pipe joint 20a, is formed between the first discharging conduit joint 18a and the second discharging conduit joint 19a in the arrangement direction L.

The low pressure supercharging device LTC and the high pressure supercharging device HTC are arranged such that the axial direction thereof is parallel to the arrangement direction L. Also, the low pressure supercharging device LTC and the high pressure supercharging device HTC are arranged such that the low pressure compressor LC and the high pressure compressor HC face each other, in other words, such that the low pressure turbine LT and the high pressure turbine HT are separated.

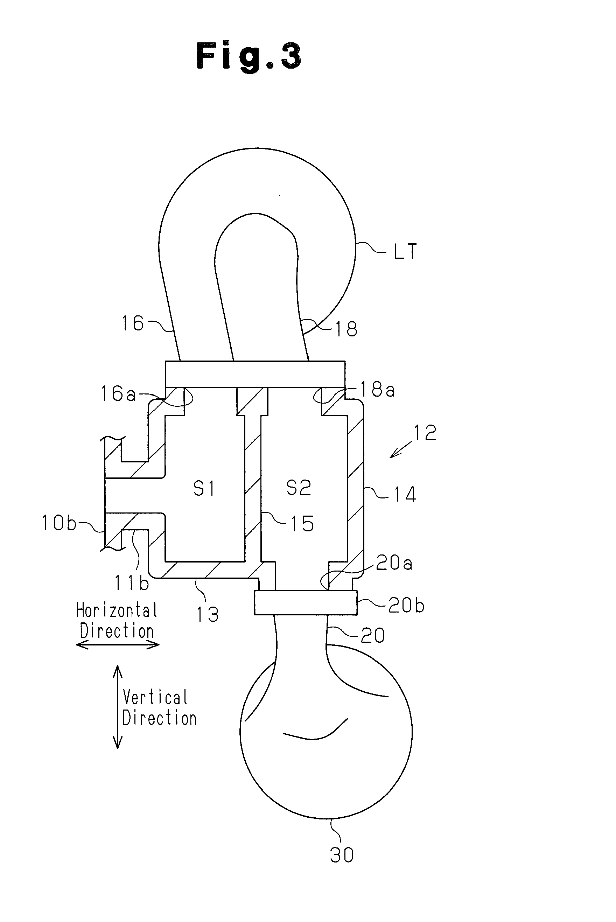

As shown in Fig. 3, the first supplying conduit joint 16a and the first discharging conduit joint 18a are both located on a vertically upper side of the manifold main body 12 (the upper side in Fig. 3), and the low pressure turbine LT is located vertically above the manifold main body 12 (above, as viewed in Fig. 3).

Also, the exhaust pipe joint 20a is located on a vertically lower side of the manifold main body 12 (the lower side as viewed in Fig. 3), and the exhaust purifying device 30 is located vertically below the manifold main body 12 (below, as viewed in Fig. 3).

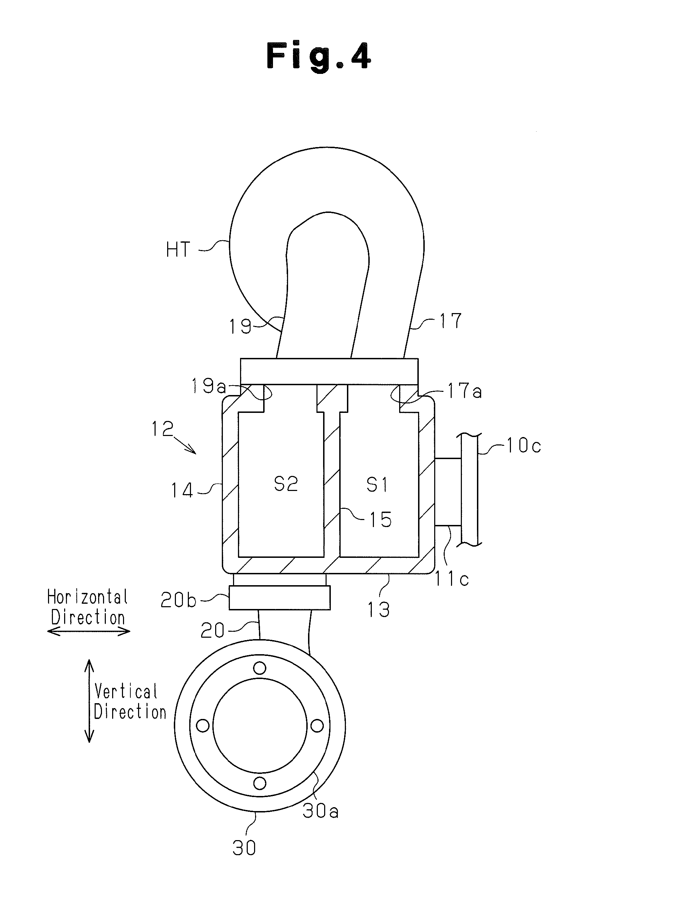

As shown in Fig. 4, the second supplying conduit joint 17a and the second discharging conduit joint 19a are both located on a vertically upper side of the manifold main body 12 (the upper side in Fig. 4), and the high pressure turbine HT is located vertically above the manifold main body 12 (above, as viewed in Fig. 4).

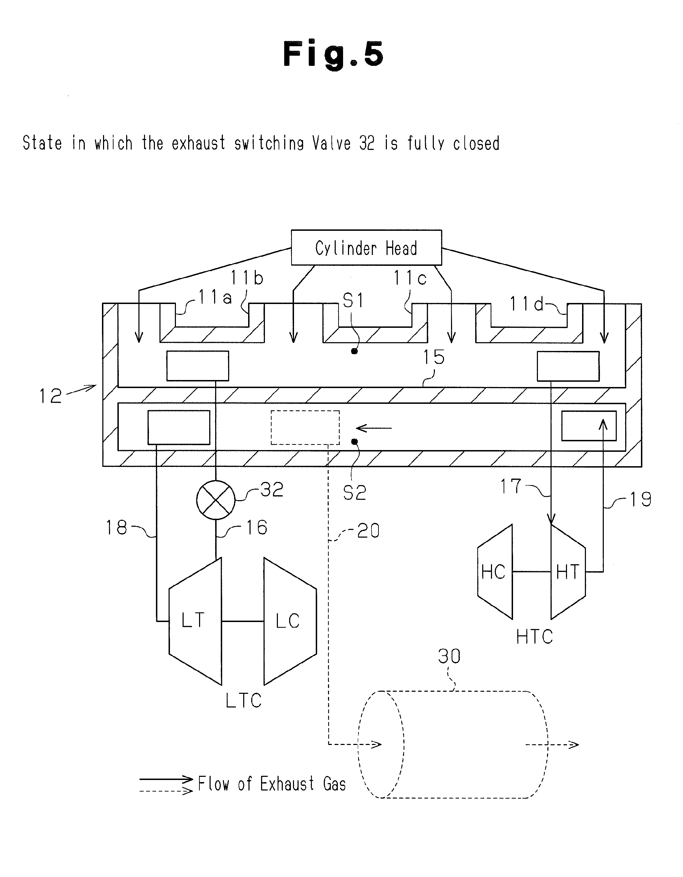

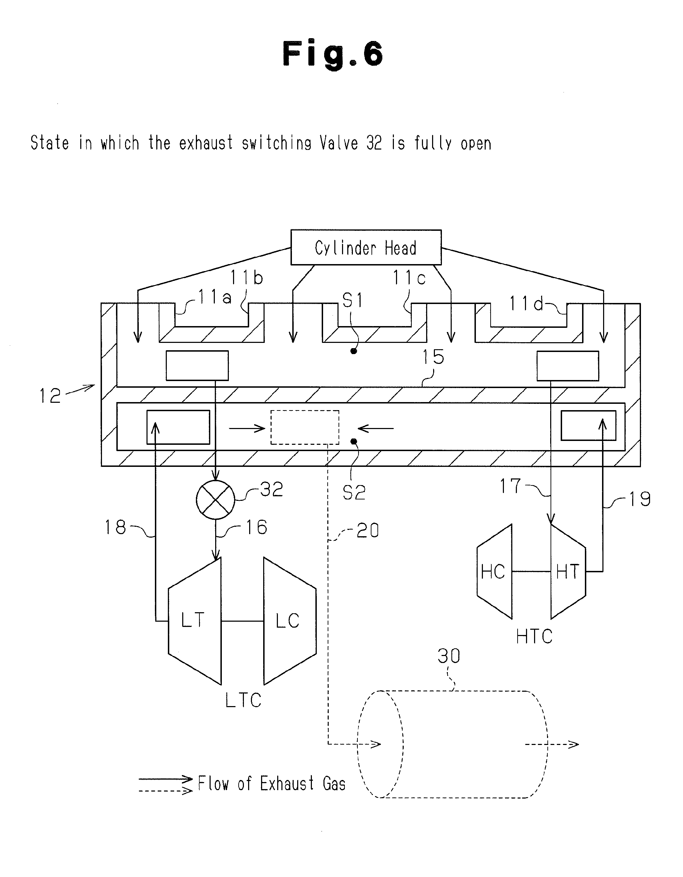

The operation of the exhaust system of the internal combustion engine 1 will now be described with reference to Figs. 5 and 6. Fig. 5 shows the flow of exhaust gas when the exhaust switching valve 32 is fully closed, and Fig. 6 shows the flow of exhaust gas when the exhaust switching valve 32 is fully open.

First, when the exhaust switching valve 32 is fully closed, since the flow of exhaust gas to the low pressure turbine LT is inhibited as shown in Fig. 5, the exhaust gas discharged from the branch pipes 11a to 11d to the first space S1 flows through the second supplying conduit 17 into the high pressure turbine HT. Thus, only the high pressure supercharging device HTC is driven. Then, the exhaust gas from the high pressure supercharging device HTC is discharged to the second space S2 through the second discharging conduit 19, and subsequently flows into the exhaust purifying device 30 via the exhaust pipe 20.

When the exhaust switching valve 32 is fully open, the flow of exhaust gas to the low pressure turbine LT is permitted as shown in Fig. 6. Thus, part of the exhaust gas discharged from the branch pipes 11a to 11d to the first space S1 flows into the high pressure turbine HT through the second supplying conduit 17, and the remaining part of the exhaust gas flows into the low pressure turbine LT through the first supplying conduit 16. Accordingly, both the low pressure supercharging device LTC and the high pressure supercharging device HTC are driven. The exhaust gas from the high pressure supercharging device HTC is discharged to the second space S2 through the second discharging conduit 19, and the exhaust gas from the low pressure supercharging device LTC is discharged to the second space S2 through the first discharging conduit 18. Subsequently, the exhaust gas flows into the exhaust purifying device 30 through the exhaust pipe 20.

The internal combustion engine according to the first embodiment has the following advantages.
(1) The exhaust manifold 10 of the internal combustion engine 1 includes the branch pipes 11a to 11d, the manifold main body 12, and the partition 15, which is provided in the manifold main body 12. The partition 15 divides the internal space of the manifold main body 12 into the first space S1, which includes the connection portions 111a to 111d to which the branch pipes 11a to 11d are connected, and the second space S2, which does not include the connection portions 111a to 111 d. Also, the first supplying conduit 16 and the second supplying conduit 17 connect the first outer wall 13 of the manifold main body 12 forming the first space S1 to the low pressure turbine LT and the high pressure turbine HT located outside of the manifold main body 12, and supply the exhaust gas from the first space S1 to the turbines LT, HT. Also, the first discharging conduit 18 and the second discharging conduit 19 connect the second outer wall 14 of the manifold main body 12 forming the second space S2 to the turbines LT, HT, and discharge the exhaust gas from the turbines LT, HT to the second space S2. The exhaust pipe 20 connected to the second outer wall 14 discharges the exhaust gas from the second space S2. Also, the exhaust switching valve 32 provided in the first supplying conduit 16 adjusts the flow rate of exhaust gas flowing into the low pressure turbine LT. With this structure, since the low pressure turbine LT and the high pressure turbine HT are secured to the exhaust manifold 10 on both the upstream and downstream ends along the flow of exhaust gas, the exhaust system is assembled by separately mounting the low pressure turbine LT, the high pressure turbine HT, and the exhaust pipe 20 on the exhaust manifold 10. Also, as compared to the structure in which the low pressure turbine LT, the high pressure turbine HT, and the exhaust pipe 20 are mounted on the exhaust manifold 10 at a downstream end of the exhaust manifold 10 in series, the number of the components of the exhaust system located downstream of the exhaust manifold 10 is reduced. This facilitates assembly of the exhaust system.
(2) The connection portions 111a to 111d are arranged in a line, and the manifold main body 12 is formed to extend in the arrangement direction L of the connection portions 111a to 111d. Also, the first supplying conduit 16 and the first discharging conduit 18 are connected to the manifold main body 12 on one end of the manifold main body 12 in the arrangement direction L (on the end closer to the first cylinder #1 in this example), and the second supplying conduit 17 and the second discharging conduit 19 are connected to the manifold main body 12 on the other end of the manifold main body 12 in the arrangement direction L (on the end closer to the fourth cylinder #4 in this example). Thus, the distance between the first supplying conduit 16 and the first discharging conduit 18 with respect to the second supplying conduit 17 and the second discharging conduit 19 is increased. This further facilitates assembly of the exhaust system.
(3) The low pressure supercharging device LTC and the high pressure supercharging device HTC are arranged such that the low pressure compressor LC of the low pressure supercharging device LTC and the high pressure compressor HC of the high pressure supercharging device HTC face each other. Thus, the distance between the low pressure compressor LC and the high pressure compressor HC is reduced. This simplifies the structure of the intake system.
(4) The exhaust purifying device 30 for purifying exhaust gas is connected to the downstream end of the exhaust pipe 20 along the flow of exhaust gas. Thus, the exhaust purifying device 30 is mounted on the exhaust manifold 10 independently from the low pressure turbine LT and the high pressure turbine HT. Also, as compared to the structure in which the turbines LT, HT, the exhaust pipe 20, and the exhaust purifying device 30 are mounted on the exhaust manifold 10 at the downstream end of the exhaust manifold 10 in series, the number of components of the exhaust system located downstream of the exhaust manifold 10 is reduced. This facilitates assembly of the exhaust system.

### <Second Embodiment>

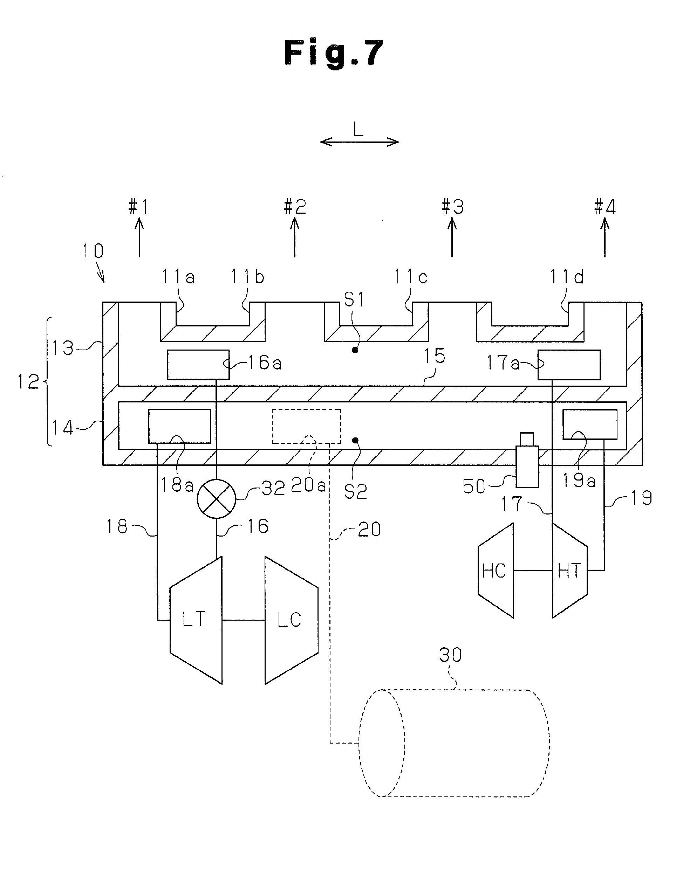

A multi-cylinder internal combustion engine according to a second embodiment of the present invention will now be described with reference to Fig. 7.

The second embodiment differs from the first embodiment in that a fuel addition valve 50 for adding fuel to exhaust gas is provided in the manifold main body 12, but other structures are the same as the first embodiment. Differences from the first embodiment will mainly be discussed below.

The joint between the second outer wall 14 and the exhaust pipe 20, which is the exhaust pipe joint 20a, is arranged closer to the first discharging conduit joint 18a with respect to the center position between the first discharging conduit joint 18a, at which the first discharging conduit 18 is connected to the manifold main body 12, and the second discharging conduit joint 19a, at which the second discharging conduit 19 is connected to the manifold main body 12, in the arrangement direction L of the connection portions 111a to 111d (the left and right direction in Fig. 7).

Also, the fuel addition valve 50 is located closer to the second discharging conduit joint 19a with respect to the center position between the second discharging conduit joint 19a and the exhaust pipe joint 20a in the arrangement direction L. Fuel is supplied to the fuel addition valve 50 from a non-illustrated fuel supply system. That is, the fuel addition valve 50 adds an additive to exhaust gas at a position downstream of the high pressure turbine HT along the flow of exhaust gas and upstream of the exhaust pipe joint 20a along the flow of exhaust gas. The fuel addition valve 50 of the second embodiment corresponds to the addition valve according to the present invention, and fuel added to the exhaust gas from the fuel addition valve 50 corresponds to the additive.

The internal combustion engine according to the second embodiment has the following advantages in addition to the advantages of the first embodiment.
(5) The fuel addition valve 50 is provided to add the additive to the exhaust gas at the position downstream of the high pressure turbine HT along the flow of exhaust gas, and upstream of the exhaust pipe joint 20a, at which the exhaust pipe 20 is connected to the exhaust manifold 10, along the flow of exhaust gas. Since the fuel addition valve 50 is located downstream of the low pressure turbine LT and the high pressure turbine HT along the flow of exhaust gas, the additive is prevented from adhering to movable parts of the turbines LT, HT. Also, since the distance between the fuel addition valve 50 and the exhaust purifying device 30 is increased as compared to the structure in which the addition valve is provided in an exhaust pipe, the additive is appropriately diffused before the additive added from the fuel addition valve 50 flows into the exhaust purifying device 30. Thus, the additive is evenly distributed in the exhaust purifying device 30.
(6) The exhaust pipe joint 20a is located closer to the first discharging conduit joint 18a with respect to the center position between the first discharging conduit joint 18a, at which the first discharging conduit 18 is connected to the manifold main body 12, and the second discharging conduit joint 19a, at which the second discharging conduit 19 is connected to the manifold main body 12. Also, the fuel addition valve 50 is located closer to the second discharging conduit joint 19a with respect to the center position between the second discharging conduit joint 19a and the exhaust pipe joint 20a. Thus, the distance between the fuel addition valve 50 and the exhaust pipe joint 20a is adequately increased in the structure in which the fuel addition valve 50 is located between the second discharging conduit joint 19a and the exhaust pipe joint 20a. Therefore, the additive is evenly distributed in the exhaust purifying device 30.

The multi-cylinder internal combustion engine according to the present invention is not limited to the structure illustrated in the above described embodiments, but may be modified in the following forms.

The arrangement position of the fuel addition valve 50 is not limited to the position illustrated in the second embodiment, but for example, the fuel addition valve may be provided in the second discharging conduit 19. Also, in a structure in which the distance between the exhaust pipe joint 20a and the exhaust purifying device 30 is long to a certain extent, the fuel addition valve may be located in the exhaust pipe 20 downstream of the exhaust pipe joint along the flow of exhaust gas.

The arrangement position of the exhaust pipe joint 20a is not limited to the position illustrated in the above embodiments. For example, with a structure in which the fuel addition valve is not provided in the manifold main body 12, the exhaust pipe joint 20a may be located at the center position between the first discharging conduit joint 18a, at which the first discharging conduit 18 is connected to the manifold main body 12, and the second discharging conduit joint 19a, at which the second discharging conduit 19 is connected to the manifold main body 12, in the arrangement direction L of the connection portions 111a to 111d (the left and right direction in Fig. 7).

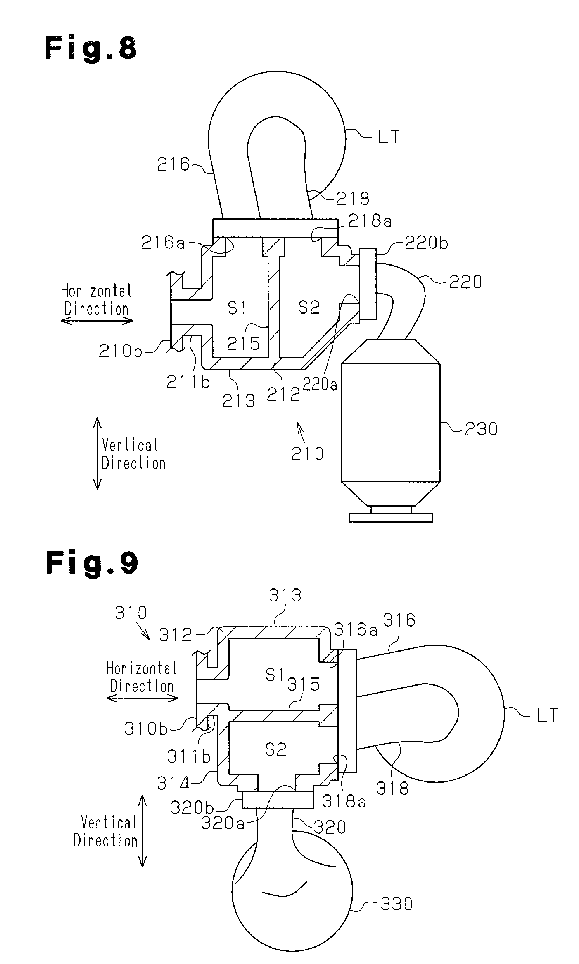

In each of the above embodiments, the exhaust pipe joint 20a is located on the vertically lower side of the manifold main body 12 (the lower side as viewed in Fig. 3), and the exhaust purifying device 30 is located vertically below the manifold main body 12 (below, as viewed in Fig. 3). However, the arrangement manner of the exhaust pipe joint and the exhaust purifying device is not limited to this. For example, an exhaust pipe joint 220a may be provided on the side surface of the manifold main body 12 (on the right side surface in Fig. 8), and the cylindrical exhaust purifying device 30 may be provided such that the central axis of the exhaust purifying device 30 lies along the vertical direction as shown in Fig. 8. In this case, the direction in which an exhaust pipe 220 extends may be bent to gradually change from the horizontal direction to the vertical direction in that order from upstream of the flow of exhaust gas.

In each of the above embodiments, the partition 15, 215 is formed such that the first space S1 and the second space S2 defined in the manifold main body 12, 212 are adjacent to each other in the direction in which the branch pipes extend (the left and right direction in Figs. 3, 4, and 8). However, the relationship between the direction in which the branch pipes extend and the adjacent direction of the first space S1 and the second space S2 is not limited to this. For example, as shown in Fig. 9, a partition 315 may be formed such that the first space S1 and the second space S2 are adjacent to each other in the direction (the vertical direction in Fig. 9) perpendicular to the direction in which branch pipes 311b extend (the left and right direction in Fig. 9). A first supplying conduit joint 316a and a first discharging conduit joint 318a are both formed in the side surface of the manifold main body 12 (the right side surface in Fig. 9), and the low pressure turbine LT is provided on the side surface of the manifold main body 12 (the right side surface in Fig. 9). Also, an exhaust pipe joint 320a is located on a vertically lower side of the manifold main body 12 (the lower side as viewed in Fig. 9), and an exhaust purifying device 330 is located vertically below the manifold main body 12 (below, as viewed in Fig. 9).

As the above described embodiment, it is desirable to provide the low pressure supercharging device LTC and the high pressure supercharging device HTC such that the low pressure compressor LC and the high pressure compressor HC face each other, to simplify the structure of the intake system by reducing the distance between the low pressure compressor LC and the high pressure compressor HC. However, the supercharging devices LTC, HTC are not limited to be arranged in this manner. For example, the low pressure supercharging device LTC and the high pressure supercharging device HTC may be located such that the low pressure turbine LT and the high pressure turbine HT face each other. Alternatively, the low pressure compressor LC and the high pressure turbine HT may face each other, or the low pressure turbine LT and the high pressure compressor HC may face each other. When such a modification is made, the arrangement position of the supplying conduit joint and the discharging conduit joint may be changed as required according to the modification.

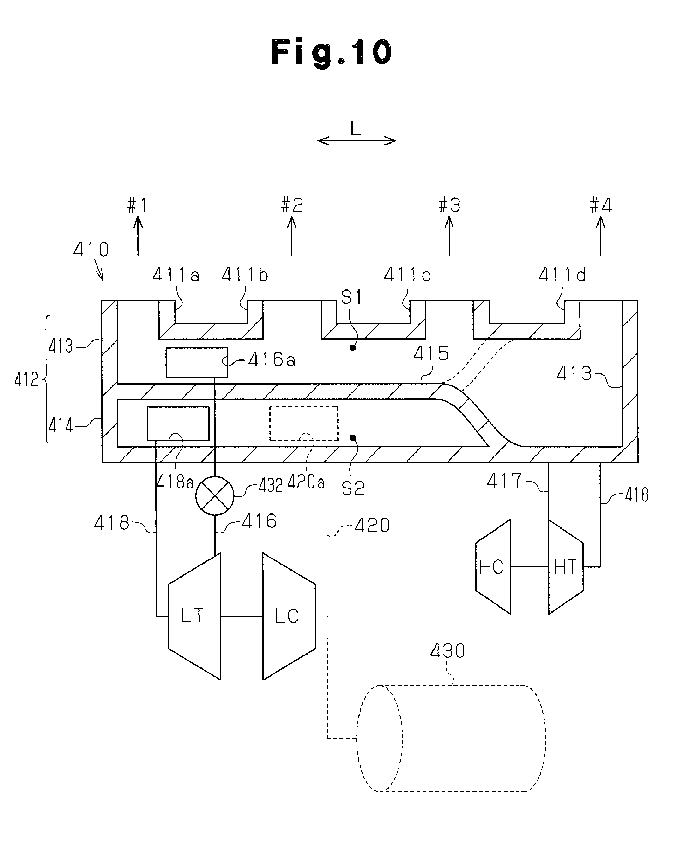

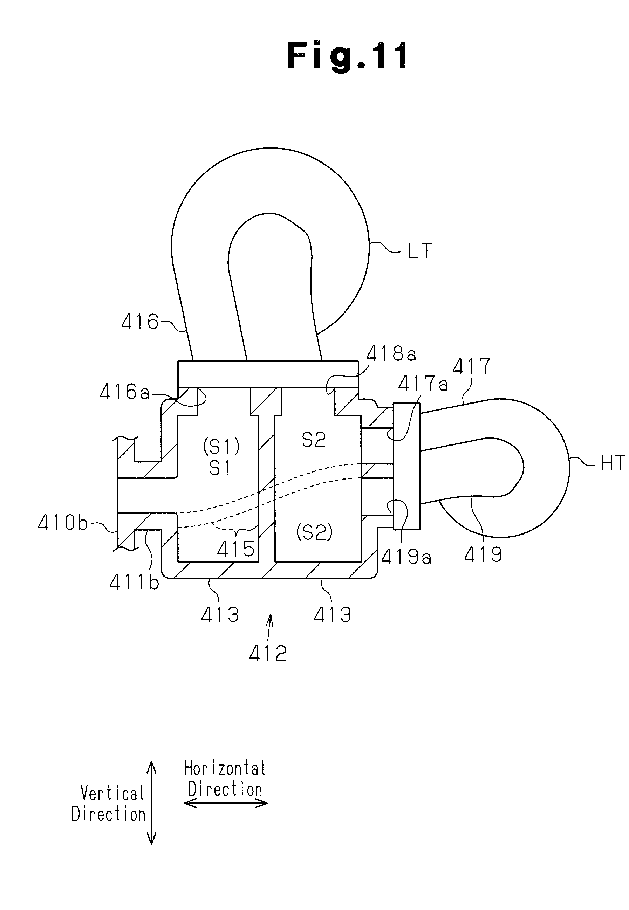

Each of the above embodiments employs the planar partition 15, 215, 315. However, the shape of the partition is not limited to this, and the partition may have a curved surface shape. For example, as shown in Figs. 10 and 11, a partition 415 is formed to extend in the vertical direction in the same manner as the partitions 15, 215 shown in Figs. 2, 3, and 8 at the position closer to the first cylinder #1 (the left side in Fig. 10, the front of the elevation of the drawing in Fig. 11) with respect to the center position of the arrangement direction L (the left and right direction in Fig. 10) of the connection portions between branch pipes 411a to 411d and a manifold main body 412. The partition 415 is formed to extend along the horizontal direction in the same manner as the partition 315 shown in Fig. 9 at the position closer to the fourth cylinder #4 (the right side in Fig. 10, the back of the elevation of the drawing in Fig. 11) with respect to the center position of the arrangement direction L. Also, the partition 415 is formed to gradually incline from the first cylinder #1 toward the fourth cylinder #4 in the arrangement direction L. Further, as shown in Fig. 11, a first supplying conduit joint 416a and a first discharging conduit joint 418a are both located on a vertically upper side of the manifold main body 412 (the upper side in Fig. 11), and the low pressure turbine LT is located vertically above the manifold main body 412 (above, as viewed in Fig. 11). Also, a second supplying conduit joint 417a and a second discharging conduit joint 419a are both located on the side surface of the manifold main body 412 (on the right side surface in Fig. 11), and the high pressure turbine HT is located on the side of the manifold main body 412 (the right side in Fig. 11) further from branch pipes 411 b.

As described above, the flexibility of layout of the exhaust system is increased by changing the arrangement manner of the partition, the exhaust pipe joint, the supplying conduit joints, and the discharging conduit joints as required.

In each of the above embodiments, a structure is illustrated in which the low pressure turbine LT is connected to the first supplying conduit, and the high pressure turbine HT is connected to the second supplying conduit. However, the first exhaust device and the second exhaust device of the present invention are not limited to the low pressure turbine LT and the high pressure turbine HT. For example, turbines having the same expansion ratio may be connected to the first supplying conduit and the second supplying conduit. In this case, an adjusting valve for adjusting the flow rate of exhaust gas supplied to each turbine may be provided in each of the first supplying conduit and the second supplying conduit.

In each of the above embodiments, the structure in which the turbines are connected to the first supplying conduit and the second supplying conduit is shown, but the exhaust device of the present invention is not limited to the turbine. The turbine may be replaced with other exhaust device such as an exhaust purifying device.

In each of the above embodiments, two supplying conduits and two discharging conduits are provided, but the number of the supplying conduits and the discharging conduits is not limited to this. That is, the number of the supplying conduits and the discharging conduits may be three or more, or one.

## Claims

1. A multi-cylinder internal combustion engine (1) comprising:
an exhaust manifold (10) including a manifold main body (12) and a partition (15) located inside the manifold main body (12) to divide an internal space of the manifold main body (12) into a first space (S1) and a second space (S2);
a plurality of supplying conduits (16, 17), which connect part of an outer wall of the manifold main body (12) forming the first space (S1) to a plurality of exhaust devices (LT, HT) provided outside of the manifold main body (12), and supply exhaust gas from the first space (S1) to the exhaust devices (LT, HT); and
a plurality of discharging conduits (18, 19), which connect part of the outer wall of the manifold main body (12) forming the second space (S2) to the exhaust devices (LT, HT), and discharges the exhaust gas from the exhaust devices (LT, HT) to the second space (S2);
**characterized in that** the internal combustion engine (1) further comprises
an exhaust pipe (20) connected to part of the outer wall of the manifold main body (12) forming the second space (S2), the exhaust pipe (20) discharging the exhaust gas from the second space (S2); wherein
the exhaust manifold includes a plurality of branch pipes (11a to 11d) connected to a plurality of cylinders (#1 to #4), the branch pipes (11a to 11d) are connected to the manifold main body (12) at downstream ends of the branch pipes (11 a to 11 d) along the flow of exhaust gas, the first space (S1) includes connection portions (111 a to 111 d) at which the branch pipes (11 to 11 d) are connected and the second space (S2) does not include the connection portions (111a to 111 d).

2. The multi-cylinder internal combustion engine (1) according to claim 1, wherein,
the plurality of supplying conduits (16, 17) include a first supplying conduit (16) and a second supplying conduit (17),
the plurality of exhaust devices (LT, HT) include a first exhaust device (LT), which is connected to the first supplying conduit (16), and a second exhaust device (HT), which is connected to the second supplying conduit (17), and
the plurality of discharging conduits (18, 19) include a first discharging conduit (18), which is connected to the first exhaust device (LT), and a second discharging conduit (19), which is connected to the second exhaust device (HT).

3. The multi-cylinder internal combustion engine (1) according to claim 2, wherein,
the first exhaust device (LT) is a low pressure turbine (LT) provided in an exhaust driven low pressure supercharging device (LTC),
the second exhaust device (HT) is a high pressure turbine (HT) provided in an exhaust driven high pressure supercharging device (HTC), the high pressure turbine (HT) having a higher expansion ratio as compared to the low pressure turbine (LT), and
the multi-cylinder internal combustion engine (1) further comprises an adjusting valve (32) located in the first supplying conduit (16), the adjusting valve (32) adjusting the flow rate of exhaust gas flowing into the low pressure turbine (LT).

4. The multi-cylinder internal combustion engine (1) according to claim 3, wherein,
the connection portions (111a to 111 d) are arranged in a line on the manifold main body (12),
the manifold main body (12) is formed to extend along an arrangement direction of the connection portions (111 to 111 d),
the first supplying conduit (16) and the first discharging conduit (18) are connected to the manifold main body (12) on one end of the arrangement direction, and
the second supplying conduit (17) and the second discharging conduit (19) are connected to the manifold main body (12) on the other end of the arrangement direction.

5. The multi-cylinder internal combustion engine (1) according to claim 4, wherein the exhaust pipe (20) is connected to the manifold main body (12) at a position between a first joint (18a), at which the first discharging conduit (18) is connected to the manifold main body (12), and a second joint (19a), at which the second discharging conduit (19) is connected to the manifold main body (12).

6. The multi-cylinder internal combustion engine (1) according to claim 4 or 5, wherein the low pressure supercharging device (LTC) and the high pressure supercharging device (HTC) are arranged such that a low pressure compressor (LC) provided in the low pressure supercharging device (LTC) faces a high pressure compressor (HC) provided in the high pressure supercharging device (HTC).

7. The multi-cylinder internal combustion engine (1) according to any one of claims 3 to 6,
wherein an exhaust purifying device (30) for purifying the exhaust gas is connected to a downstream end of the exhaust pipe (20) along the flow of exhaust gas.

8. The multi-cylinder internal combustion engine (1) according to claim 7, further comprising an addition valve (50), which adds an additive to the exhaust gas downstream of the high pressure turbine (HT) along the flow of exhaust gas and upstream of an exhaust pipe joint (20a) at which the exhaust pipe (20) is connected to the exhaust manifold (10).

9. The multi-cylinder internal combustion engine (1) according to claim 8, wherein the addition valve (50) is provided in the manifold main body (12).

10. The multi-cylinder internal combustion engine (1) according to claim 9, wherein,
the connection portions (111a to 111d) are arranged in a line on the manifold main body (12), the manifold main body (12) is formed to extend in the arrangement direction of the connection portions (111a to 111 d),
the first supplying conduit (16) and the first discharging conduit (18) are connected to the manifold main body (12) on one end of the arrangement direction,
the second supplying conduit (17) and the second discharging conduit (19) are connected to the manifold main body (12) on the other end in the arrangement direction,
the exhaust pipe joint (20a) is located between a first joint (18a), at which the first discharging conduit (18) is connected to the manifold main body (12), and a second joint (19a), at which the second discharging conduit (19) is connected to the manifold main body (12), and closer to the first joint (18a) with respect to the center position between the first (18a) and second joints (19a), and
the addition valve (50) is located closer to the second joint (19a) with respect to the center position between the second joint (19a) and the exhaust pipe joint (20a).

## Patentansprüche

1. Mehrzylinder-Verbrennungsmotor (1) mit:
einem Abgaskrümmer mit einem Krümmerhauptkörper (12) und einer Trennwand (15), die zum Aufteilen eines Innenraums des Krümmerhauptkörpers (12) in einen ersten Raum (S1) und einen zweiten Raum (S2) innerhalb des Krümmerhauptkörpers (12) angeordnet ist;
einer Mehrzahl von Zuführungsleitungen (16, 17), die mit einem Teil einer Außenwand des Krümmerhauptkörpers (12), der den ersten Raum (S1) für eine Mehrzahl von Abgasvorrichtungen (LT, HT) bildet, die außerhalb des Krümmerhauptkörpers (12) bereitgestellt sind, verbinden, und Abgas von dem ersten Raum (S1) zu den Abgasvorrichtungen (LT, HT) zuführen; und
einer Mehrzahl von Abführungsleitungen (18, 19), die mit einem Teil der Außenwand des Krümmerhauptkörpers (12), der den zweiten Raum (S2) für die Abgasvorrichtungen (LT, HT) bildet, verbinden, und das Abgas von den Abgasvorrichtungen (LT, HT) zu dem zweiten Raum (S2) abführen;
**dadurch gekennzeichnet, dass** der Verbrennungsmotor (1) ferner
ein Abgasrohr (20) aufweist, das mit einem Teil der Außenwand des Krümmerhauptkörpers (12) verbunden ist, der den zweiten Raum (S2) bildet, wobei das Abgasrohr (20) das Abgas von dem zweiten Raum (S2) abführt; wobei
der Abgaskrümmer eine Mehrzahl von Abzweigrohren (11a bis 11d) aufweist, die mit einer Mehrzahl von Zylindern (#1 bis #4) verbunden sind, die Abzweigrohre (11a bis 11d) mit dem Krümmerhauptkörper (12) an stromabwärtigen Enden der Abzweigrohre (11a bis 11d) entlang des Abgasstroms verbunden sind, der erste Raum (S1) Verbindungsabschnitte (111a bis 111 d) aufweist, an denen die Abzweigrohre (11a bis 11d) verbunden sind, und der zweite Raum (S2) keine Verbindungsabschnitte (111a bis 111d) aufweist.

2. Mehrzylinder-Verbrennungsmotor (1) nach Anspruch 1, wobei
die Mehrzahl von Zuführungsleitungen (16, 17) eine erste Zuführungsleitung (16) und eine zweite Zuführungsleitung (17) aufweisen,
die Mehrzahl von Abgasvorrichtungen (LT, HT) eine erste Abgasvorrichtung (LT), die mit der ersten Zuführungsleitung (16) verbunden ist, und eine zweite Abgasvorrichtung (HT) aufweist, die mit der zweiten Zuführungsleitung (17) verbunden ist, und
die Mehrzahl von Abführungsleitungen (18, 19) eine erste Abführungsleitung (18), die mit der ersten Abgasvorrichtung (LT) verbunden ist, und eine zweite Abführungsleitung (19) aufweist, die mit der zweiten Abgasvorrichtung (HT) verbunden ist.

3. Mehrzylinder-Verbrennungsmotor (1) nach Anspruch 2, wobei
die erste Abgasvorrichtung (LT) eine in einer vom Abgas angetrieben Niederdruck-Aufladevorrichtung (LTC) bereitgestellte Niederdruckturbine (LT) ist,
die zweite Abgasvorrichtung (HT) eine in einer von Abgas angetrieben Hochdruck-Aufladevorrichtung (HTC) bereitgestellte Hochdruckturbine (LT) ist, wobei die Hochdruckturbine (HT) im Vergleich zu der Niederdruckturbine (LT) ein höheres Expansionsverhältnis hat, und
der Mehrzylinder-Verbrennungsmotor (1) ferner ein in der ersten Zuführungsleitung (16) angeordnetes Einstellventil (32) aufweist, wobei das Einstellventil (32) den Durchfluss des in die Niederdruckturbine (LT) fließenden Abgases einstellt.

4. Mehrzylinder-Verbrennungsmotor (1) nach Anspruch 3, wobei
die Verbindungsabschnitte (111a bis 111d) in einer Linie an dem Krümmerhauptkörper (12) angeordnet sind,
der Krümmerhauptkörper (12) so ausgebildet ist, dass er sich entlang einer Anordnungsrichtung der Verbindungsabschnitte (111a bis 111 d) erstreckt,
die erste Zuführungsleitung (16) und die erste Abführungsleitung (18) mit dem Krümmerhauptkörper (12) an einem Ende der Anordnungsrichtung verbunden sind, und
die zweite Zuführungsleitung (17) und die zweite Abführungsleitung (19) mit dem Krümmerhauptkörper (12) an dem anderen Ende der Anordnungsrichtung verbunden sind.

5. Mehrzylinder-Verbrennungsmotor (1) nach Anspruch 4, wobei das Abgasrohr (20) mit dem Krümmerhauptkörper (12) an einer Position zwischen einer ersten Verbindungsstelle (18a), an der die erste Abführungsleitung (18) mit dem Krümmerhauptkörper (12) verbunden ist, und einer zweiten Verbindungsstelle (19a) verbunden ist, an der die zweite Abführungsleitung (19) mit dem Krümmerhauptkörper (12) verbunden ist.

6. Mehrzylinder-Verbrennungsmotor (1) nach Anspruch 4 oder 5, wobei die Niederdruck-Aufladevorrichtung (LTC) und die Hochdruck-Aufladevorrichtung (HTC) derart angeordnet sind, dass ein in der Niederdruck-Aufladevorrichtung (LTC) bereitgestellter Niederdruck-Kompressor (LC) einem in der Hochdruck-Aufladevorrichtung (HTC) bereitgestellten Hochdruck-Kompressor (HC) gegenüberliegt.

7. Mehrzylinder-Verbrennungsmotor (1) nach einem der Ansprüche 3 bis 6, wobei eine Abgasreinigungsvorrichtung (30) zum Reinigen des Abgases mit einem stromabwärtigen Ende des Abgasrohrs (20) entlang des Abgasstroms verbunden ist.

8. Mehrzylinder-Verbrennungsmotor (1) nach Anspruch 7, ferner mit einem Beimengventil (50), das dem Abgas einen Zusatzstoff stromab der Hochdruckturbine (HT) entlang des Abgasstroms und stromauf einer Abgasrohrverbindungsstelle (20a) hinzufügt, an der das Abgasrohr (20) mit dem Abgaskrümmer (10) verbunden ist.

9. Mehrzylinder-Verbrennungsmotor (1) nach Anspruch 8, wobei das Beimengventil (50) in dem Krümmerhauptkörper (12) bereitgestellt ist.

10. Mehrzylinder-Verbrennungsmotor (1) nach Anspruch 9, wobei
die Verbindungsabschnitte (111a bis 111d) in einer Linie an dem Krümmerhauptkörper (12) angeordnet sind,
der Krümmerhauptkörper (12) so ausgebildet ist, dass er sich in der Anordnungsrichtung der Verbindungsabschnitte (111a bis 111d) erstreckt,
die erste Zuführungsleitung (16) und die erste Abführungsleitung (18) mit dem Krümmerhauptkörper (12) an einem Ende der Anordnungsrichtung verbunden sind,
die zweite Zuführungsleitung (17) und die zweite Abführungsleitung (19) mit dem Krümmerhauptkörper (12) an dem anderen Ende in der Anordnungsrichtung verbunden sind,
die Abgasrohrverbindungsstelle (20a) zwischen einer ersten Verbindungsstelle (18a), an der die erste Abführungsleitung (18) mit dem Krümmerhauptkörper (12) verbunden ist, und einer zweiten Verbindungsstelle (19a), an der die zweite Abführungsleitung (19) mit dem Krümmerhauptkörper (12) verbunden ist, und näher an der ersten Verbindungsstelle (18a) mit Bezug auf die Mittelposition zwischen der ersten (18a) und der zweiten Verbindungsstelle (19a) angeordnet ist, und
das Beimengventil (50) mit Bezug auf die Mittelposition zwischen der zweiten Verbindungsstelle (19a) und der Abgasrohrverbindungsstelle (20a) näher an der zweiten Verbindungsstelle (19a) angeordnet ist.

## Revendications

1. Moteur à combustion interne à plusieurs cylindres (1) comprenant :
un collecteur d'échappement (10) comprenant un corps principal de collecteur (12) et une séparation (15) positionnée à l'intérieur du corps principal de collecteur (12) afin de diviser un espace interne du corps principal de collecteur (12) en un premier espace (S1) et en un second espace (S2) ;
une pluralité de conduits d'alimentation (16, 17) qui raccordent une partie d'une paroi externe du corps principal de collecteur (12) formant le premier espace (S1) à une pluralité de dispositifs d'échappement (LT, HT) prévus à l'extérieur du corps principal de collecteur (12) et amènent les gaz d'échappement du premier espace (S1) aux dispositifs d'échappement (LT, HT) ; et
une pluralité de conduits de décharge (18, 19) qui raccordent une partie de la paroi externe du corps principal de collecteur (12) formant le second espace (S2) aux dispositifs d'échappement (LT, HT) et déchargent les gaz d'échappement des dispositifs d'échappement (LT, HT) dans le second espace (S2) ;
**caractérisé en ce que** le moteur à combustion interne (1) comprend en outre :
un tuyau d'échappement (20) raccordé à une partie de la paroi externe du corps principal de collecteur (12) formant le second espace (S2), le tuyau d'échappement (20) déchargeant les gaz d'échappement du second espace (S2) ; dans lequel :
le collecteur d'échappement comprend une pluralité de tuyaux de bifurcation (11a à 11d) raccordés à une pluralité de cylindres (#1 à #4), les tuyaux de bifurcation (11a à 11d) sont raccordés au corps principal de collecteur (12) au niveau des extrémités en aval des tuyaux de bifurcation (11a à 11d) le long de l'écoulement de gaz d'échappement, le premier espace (S1) comprend des parties de raccordement (111a à 111d) au niveau desquelles les tuyaux de bifurcation (11a à 11d) sont raccordés et le second espace (S2) ne comprend pas les parties de raccordement (111a à 111d).

2. Moteur à combustion interne à plusieurs cylindres (1) selon la revendication 1, dans lequel :
la pluralité de conduits d'alimentation (16, 17) comprennent un premier conduit d'alimentation (16) et un second conduit d'alimentation (17),
la pluralité de dispositifs d'échappement (LT, HT) comprennent un premier dispositif d'échappement (LT) qui est raccordé au premier conduit d'alimentation (16) et un second dispositif d'échappement (HT) qui est raccordé au second conduit d'alimentation (17), et
la pluralité de conduits de décharge (18, 19) comprennent un premier conduit de décharge (18) qui est raccordé au premier dispositif d'échappement (LT), et un second conduit de décharge (19) qui est raccordé au second dispositif d'échappement (HT).

3. Moteur à combustion interne à plusieurs cylindres (1) selon la revendication 2, dans lequel :
le premier conduit d'échappement (LT) est une turbine basse pression (LT) prévue dans un dispositif de suralimentation basse pression entraîné par échappement (LTC),
le second dispositif d'échappement (HT) est une turbine haute pression (HT) prévue dans un dispositif de suralimentation haute pression entraîné par échappement (HTC), la turbine haute pression (HT) ayant un rapport de dilation supérieur par rapport à la turbine basse pression (LT), et
le moteur à combustion interne à plusieurs cylindres (1) comprend en outre une soupape de réglage (32) positionnée dans le premier conduit d'alimentation (16), la soupape de réglage (32) réglant le débit des gaz d'échappement s'écoulant dans la turbine basse pression (LT).

4. Moteur à combustion interne à plusieurs cylindres (1) selon la revendication 3, dans lequel :
les parties de raccordement (111a à 111d) sont agencées en ligne sur le corps principal de collecteur (12),
le corps principal de collecteur (12) est formé pour s'étendre le long d'une direction d'agencement des parties de raccordement (111a à 111d),
le premier conduit d'alimentation (16) et le premier conduit de décharge (18) sont raccordés au corps principal de collecteur (12) sur une extrémité de la direction d'agencement, et
le second conduit d'alimentation (17) et le second conduit de décharge (19) sont raccordés au corps principal de collecteur (12) sur l'autre extrémité de la direction d'agencement.

5. Moteur à combustion interne à plusieurs cylindres (1) selon la revendication 4, dans lequel le tuyau d'échappement (20) est raccordé au corps principal de collecteur (12) dans une position entre un premier joint (18a), au niveau duquel le premier conduit de décharge (18) est raccordé au corps principal de collecteur (12) et un second joint (19a) au niveau duquel le second conduit de décharge (19) est raccordé au corps principal de collecteur (12).

6. Moteur à combustion interne à plusieurs cylindres (1) selon la revendication 4 ou 5, dans lequel le dispositif de suralimentation basse pression (LTC) et le dispositif de suralimentation haute pression (HTC) sont agencés de sorte qu'un compresseur basse pression (LC) prévu dans le dispositif de suralimentation basse pression (LTC) fait face à un compresseur haute pression (HC) prévu dans le dispositif de suralimentation haute pression (HTC).

7. Moteur à combustion interne à plusieurs cylindres (1) selon l'une quelconque des revendications 3 à 6, dans lequel un dispositif de purification d'échappement (30) pour purifier les gaz d'échappement est raccordé à une extrémité en aval du tuyau d'échappement (20) le long de l'écoulement de gaz d'échappement.

8. Moteur à combustion interne à plusieurs cylindres (1) selon la revendication 7, comprenant en outre une soupape d'ajout (50) qui ajoute un additif au gaz d'échappement en aval de la turbine haute pression (HT) le long de l'écoulement de gaz d'échappement et en amont du joint de tuyau d'échappement (20a) au niveau duquel le tuyau d'échappement (20) est raccordé au collecteur d'échappement (10).

9. Moteur à combustion interne à plusieurs cylindres (1) selon la revendication 8, dans lequel la soupape d'ajout (50). est prévue dans le corps principal de collecteur (12).

10. Moteur à combustion interne à plusieurs cylindres (1) selon la revendication 9, dans lequel :
les parties de raccordement (111a à 111d) sont agencées sur une ligne sur le corps principal de collecteur (12),
le corps principal de collecteur (12) est formé pour s'étendre dans la direction d'agencement des parties de raccordement (111a à 111d),
le premier conduit d'alimentation (16) et le premier conduit de décharge (18) sont raccordés au corps principal de collecteur (12) sur une extrémité de la direction d'agencement,
le second conduit d'alimentation (17) et le second conduit de décharge (19) sont raccordés au corps principal de collecteur (12) sur l'autre extrémité dans la direction d'agencement,
le joint de tuyau d'échappement (20a) est positionné entre un premier joint (18a), auquel le premier conduit de décharge (18) est raccordé au corps principal de collecteur (12), et un second joint (19a) auquel le second conduit de décharge (19) est raccordé au corps principal de collecteur (12) et plus à proximité du premier joint (18a) par rapport à la position centrale entre les premier (18a) et second joints (19a), et
la soupape d'ajout (50) est positionnée plus à proximité du second joint (19a) par rapport à la position centrale entre le second joint (19a) et le joint de tuyau d'échappement (20a).
